(19) Europäisches Patentamt

European Patent Office

Office européen des brevets

(11) EP 0 891 911 B1

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(51) Int Cl.[7]: **B61L 25/02**, G01P 3/64

(21) Anmeldenummer: **98440146.3**

(22) Anmeldetag: **03.07.1998**

(54) **Verfahren zur Bestimmung der von einem Körper zurückgelegten Wegstrecke sowie Vorrichtung hierfür**

Method and device for determining the distance travelled by a body

Procédé et dispositif pour déterminer la distance parcourue par un corps

(84) Benannte Vertragsstaaten:
**AT BE CH DE DK ES FI FR GB IT LI NL PT SE**

(30) Priorität: **12.07.1997 DE 19729981**

(43) Veröffentlichungstag der Anmeldung:
**20.01.1999 Patentblatt 1999/03**

(73) Patentinhaber: **ALCATEL**
**75008 Paris (FR)**

(72) Erfinder: **Mindel, Klaus, Dr.**
**71563 Affalterbach (DE)**

(74) Vertreter: **Schätzle, Albin, Dipl.-Phys. et al**
**Alcatel**
**Intellectual Property Department, Stuttgart**
**70430 Stuttgart (DE)**

(56) Entgegenhaltungen:
**EP-A- 0 159 312      EP-A- 0 807 528**
**DE-A- 3 200 811**

- **PATENT ABSTRACTS OF JAPAN vol. 095, no. 002, 31. März 1995 & JP 06 324064 A (HITACHI LTD), 25. November 1994**

**Beschreibung**

Die Erfindung betrifft ein Verfahren zur Bestimmung der von einem Körper zurückgelegten Wegstrekke nach dem Oberbegriff des Anspruchs 1 sowie eine Vorrichtung hierfür nach dem Oberbegriff des Anspruchs 7.

Zur Lösung der Aufgabe, die von einem sich bewegenden Körper zurückgelegte Wegstrecke zu messen, sind eine Vielzahl unterschiedlicher Lösungsansätze entwickelt worden. Einer dieser Lösungsansätze besteht darin, entlang des vom Körper zurückgelegten Weges Markierungen anzubringen, die von einem auf dem Körper befestigten Sensor registriert werden. Wenn diese Markierungen in gleichen Abständen zueinander angeordnet sind, so läßt sich, sofern dieser Abstand bekannt ist, durch einfaches Zählen der Markierungen die zurückgelegte Wegstrecke bestimmen.

Ein Beispiel hierfür findet sich in der JP-A-06324064. Dort sind an einem Eisenbahnfahrzeug ein Sender und zwei Empfänger angebracht, mit deren Hilfe Schienenbefestigungen detektiert werden. Der Abstand der Schienenbefestigungen wird dort als bekannt vorausgesetzt, so daß die Wegmessung durch bloßes Abzählen der Schienenbefestigungen erfolgt.

Aus der EP 0807528 ist ein Verfahren bekannt, die Position eines Schlittens zu bestimmen. Dabei wird die von einem Körper zurückgelegte Wegstrecke bestimmt, bei dem wenigsten zwei om Körper befestigte Sensoren unabhängig voneinander das Vorbeibewegen des Körpers an Markierungen registrieren, die entlang der Wegstrecke angeordnet sind, wobei die Zeiten der Registriervorgänge in einem Speicher 26 gespeichert sind.

Aus der DE-A1-32 00 811 ist ein Verfahren zur Bestimmung des Standortes eines spurgeführten Fahrzeugs bekannt, bei dem nicht nur ein, sondern wenigstens zwei Leseeinrichtungen, die in Fahrtrichtung hintereinander auf dem Fahrzeug befestigt sind, an der Strecke angebrachte Markierungen registrieren. Das Verfahren soll insbesondere zur hochgenauen Standortbestimmung bei Rangier- und Verladevorgängen einsetzbar sein. Daher müssen die Markierungen sehr eng beieinander liegen und außerdem exakt äquidistant angeordnet sein. Sie sind deswegen vorzugsweise als Löcher oder Zähne in einer am Gleiskörper zu befestigenden Schiene ausgeführt. Wegen des hohes Aufwandes zum Anbringen der Markierungen ist dieses Verfahren nicht zur Anwendung im gesamten Streckennetz geeignet.

Es ist daher Aufgabe der Erfindung, ein Verfahren zur Bestimmung der zurückgelegten Wegstrecke von Körpern anzugeben, welches auf der Registrierung von entlang der Wegstrecke angeordneten Markierungen beruht. Das Verfahren soll es ermöglichen, auch dann die zurückgelegte Wegstrecke genau zu bestimmen, wenn die Markierungen nur mit geringer Genauigkeit entlang der Wegstrecke angeordnet sind. Als Markierungen sollen somit auch Gegenstände verwendbar sein, die bereits entlang der Wegstrecke in mehr oder weniger regelmäßigen Abständen vorhanden sind.

Die diese Aufgabe lösende Erfindung ist durch die Merkmale des Anspruchs 1 charakterisiert. Durch Auswertung der zeitlichen Abfolge der von wenigstens zwei Sensoren gelieferten Registrierergebnisse wird ein Näherungswert für den Abstand jeweils zweier Markierungen berechnet. Die bloße Zählung von Registrierergebnisse ist damit durch eine Abstandsmessung ersetzt. Dies erlaubt es, auch Anordnungen von Markierungen zu verwenden, deren Abstand untereinander nicht konstant ist. Ein bevorzugtes Anwendungsbeispiel ist die Wegstreckenmessung von Zügen. Hier können als Markierungen die ohnehin bereits vorhandenen Schwellen oder Schienenbefestigungen verwendet werden. Da der Abstand der Schwellen voneinander auf ein und derselben Strecke, besonders aber zwischen verschiedenen Strecken recht unterschiedlich ist, ist eine nur auf Zählung von Schwellenregistrierungen beruhende Messung zu ungenau. Vorteilhaft anwendbar ist das erfindungsgemäße Verfahren ferner im Binnenschiffahrtsverkehr. Dort können am Ufer angebrachte Markierungen von mit Sensoren ausgestatteten Schiffen registriert und mit Hilfe des erfindungsgemäßen Auswertungsverfahrens ausreichend genaue Angaben zum zurückgelegten Weg gemacht werden.

Weitere vorteilhafte Ausgestaltungen der Erfindung sind den Unteransprüchen entnehmbar.

Die Erfindung wird nachfolgend anhand der Ausführungsbeispiele und der Zeichnungen eingehend erläutert. Es zeigen:

Fig. 1: Weg-Zeit-Diagramm zur Erläuterung des erfindungsgemäßen Verfahrens nach Anspruch 1,

Fig. 2: Ein Schienenfahrzeug F in vereinfachter seitlicher Darstellung,

Fig. 3: Vereinfachte Darstellung eines Sensors zum Registrieren von Schienenbefestigungen,

Fig. 4: Vereinfachte Darstellung einer Vorrichtung nach Anspruch 7 zur Ausführung des erfindungsgemäßen Verfahrens.

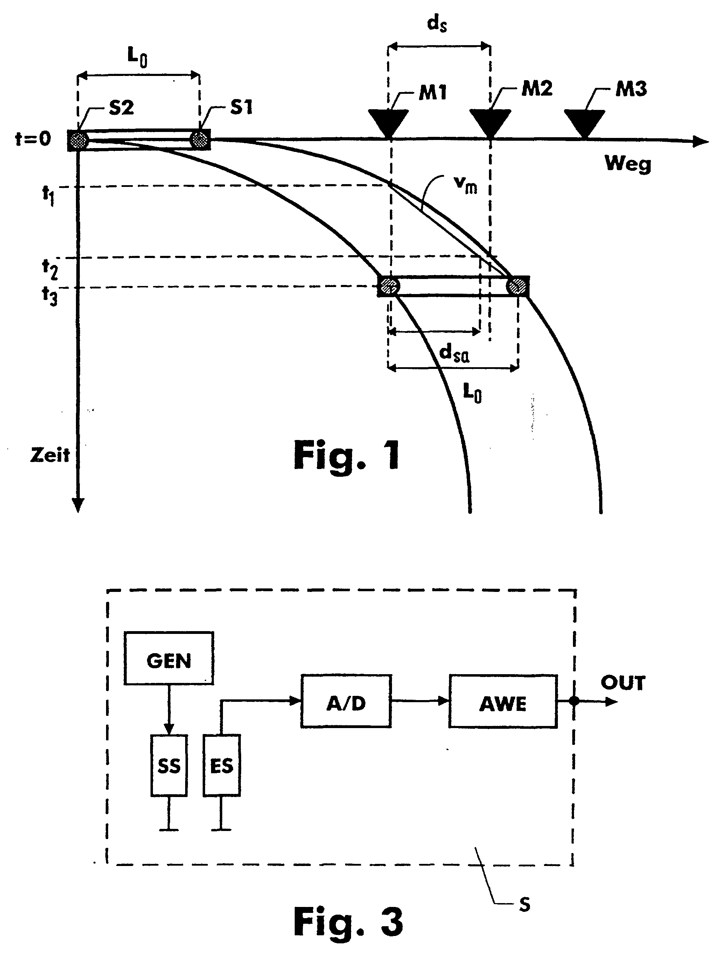

Fig. 1 zeigt ein Weg-Zeit-Diagramm, anhand dessen nachfolgend erläutert wird, wie mit Hilfe von zwei Sensoren S1 und S2 der Abstand zwischen zwei Markierungen ermittelt wird. Zur Zeit $t = 0$ werde ein Bremsvorgang enigeteitet, der den Körper auf einer annähernd parabelförmigen Bremskurve zum Stehen bringt. Der Abstand der beiden Sensoren voneinander in Bewegungsrichtung beträgt $L_0$. Zur Zeit $t_1$ überfährt der in Bewegungsrichtung vorne liegende Sensor S1 die Markierung M1. Dieser Zeitpunkt wird registriert und gespeichert. Zur Zeit $t_2$ überfährt derselbe Sensor die darauffolgende Markierung M2, was ebenfalls registriert und gespeichert wird. Kurz darauf, zur Zeit $t_3$, überfährt der zweite Sensor S2 die erste Markierung M1. Die Zeitspanne, die zwischen dem Passieren der Markierung M1 durch den ersten und den zweiten Sensor vergangen ist, beträgt somit $\Delta_1 = t_3 - t_1$. Während dieser Zeitspanne $\Delta_1$ hat sich der Körper um den Abstand der beiden Sensoren $L_0$ vorwärts bewegt. Die mittlere Geschwindigkeit $v_m$ beträgt daher in diesem Intervall $v_m = L_0/\Delta_1$.

Der erste Sensor S1 benötigt zum Zurücklegen des Weges zwischen den beiden Markierungen M1 und M2 die Zeitspanne $\Delta_2 = t_2 - t_1$. Mit diesem Wert und der mittleren Geschwindigkeit $v_m$ kann nun ein Näherungswert $d_{sa}$ für den Abstand $d_s$ zwischen den beiden Markierungen M1 und M2 berechnet werden. Es gilt:

$$d_s \approx d_{sa} = v_m \cdot \Delta_2 .$$

Wie man in Fig. 1 erkennen kann, stimmt der Näherungswert $d_{sa}$ für den Abstand der Markierungen mit dem tatsächlichen Wert $d_s$ um so besser überein, je mehr sich die Weg-Zeit-Kurve im betrachteten Intervall einer Geraden annähert, d. h. je geringer die (Brems-) Beschleunigung des Körpers ist. Um auch im Falle großer (Brems-)Beschleunigungen genaue Werte zu erhalten, wird gemäß einem bevorzugten Ausführungsbeispiel der Erfindung die Geschwindigkeit im Intervall zwischen $t_1$ und $t_3$ nicht durch eine Gerade, sondern durch eine Kurve angenähert. Eine solche Kurve kann mit Hilfe bekannter Interpolationsfunktionen berechnet werden, da die Geschwindigkeiten für zurückliegende Zeitintervalle bekannt sind und der Bewegungszustand des Körpers sich i. a. nicht beliebig abrupt ändern kann. Gegebenenfalls können bei dieser nichtlinearen Näherung die dynamischen Eigenschaften des Körpers, z. B. Gewicht, Antriebsleistung oder Reibbeiwert, berücksichtigt werden.

Bei dem in Fig. 1 dargestellten Beispiel passiert der erste Sensor S1 die zweite Markierung M2, bevor der zweite Sensor S2 die erste Markierung M1 überstreicht. Der Abstand der Sensoren $L_0$ ist hier also größer als der Abstand der Markierungen. Ebenso ist natürlich der umgekehrte Fall möglich. Es ist dann lediglich die zeitliche Abfolge der Zeiten $t_2$ und $t_3$ vertauscht; die Berechnung des Näherungswertes für den Abstand der Markierungen $d_{sa}$ bleibt davon unberührt.

Das soeben geschilderte Ausführungsbeispiel des erfindungsgemäßen Verfahrens erlaubt es somit, auch bei wechselnden Abständen zwischen den einzelnen Markierungen die zurückgelegte Wegstrecke und damit die Geschwindigkeit zuverlässig und genau zu bestimmen. Die Verwendung eines zweiten Sensors hat überdies den Vorteil, daß die von den beiden Sensoren gelieferten Signale korreliert werden können. Dadurch wirken sich unterschiedliche Signalformen, wie sie etwa durch Ausführungen von Markierungen herrühren können, nur wenig auf die Meßgenauigkeit aus. Ferner läßt sich der Zeitpunkt, in dem eine Markierung registriert wird, wesentlich genauer bestimmen als dies bei der Verwendung nur eines Sensors der Fall wäre.

Ein anderes Ausführungsbeispiel sieht vor, das eine Paar von Sensoren durch ein zweites Paar zu ergänzen. Beide Paare messen dann unabhängig voneinander die Abstände zwischen den Markierungen. Auf diese Weise läßt sich die Zuverlässigkeit der Messungen erhöhen. Je nach Beschaffenheit der Markierungen kann es beispielsweise vorkommen, daß Teile der Markierungen verdeckt oder unvollständig sind. Bei entsprechender Anordnung der beiden Paare kann dann gegebenenfalls ein Paar die Markierungen noch registrieren, während das andere Paar keine Messung mehr vornehmen kann.

Selbstverständlich kann die erfindungsgemäße Wegstreckenbestimmung auch zur Ermittlung der Geschwindigkeit des Körpers verwendet werden. Hierzu ist lediglich die zurückgelegte Wegstrecke nach der Zeit zu differenzieren.

Bei einem bevorzugten Ausführungsbeispiel der Erfindung handelt es sich bei dem Körper um ein Schienenfahrzeug oder um einen Verbund mehrerer Schienenfahrzeuge. Das erfindungsgemäße Verfahren erlaubt es nun, Schwellen oder Schienenbefestigungen als Markierungen zu verwenden. Eine bloße Zählung von Schwellen oder Schwellenbefestigungen, etwa nach dem eingangs genannten bekannten Verfahren, wäre zu ungenau, da die Schwellenabstände zwischen ca. 55 und 80 cm variieren. Bei Anwendung des erfindungsgemäßen Verfahrens kann hingegen eine sehr genaue Wegstrecken- und Geschwindigkeitsmessung für Schienenfahrzeuge durchgeführt werden, ohne daß entlang des gesamten Schienenetzes Markierungen installiert werden müßten.

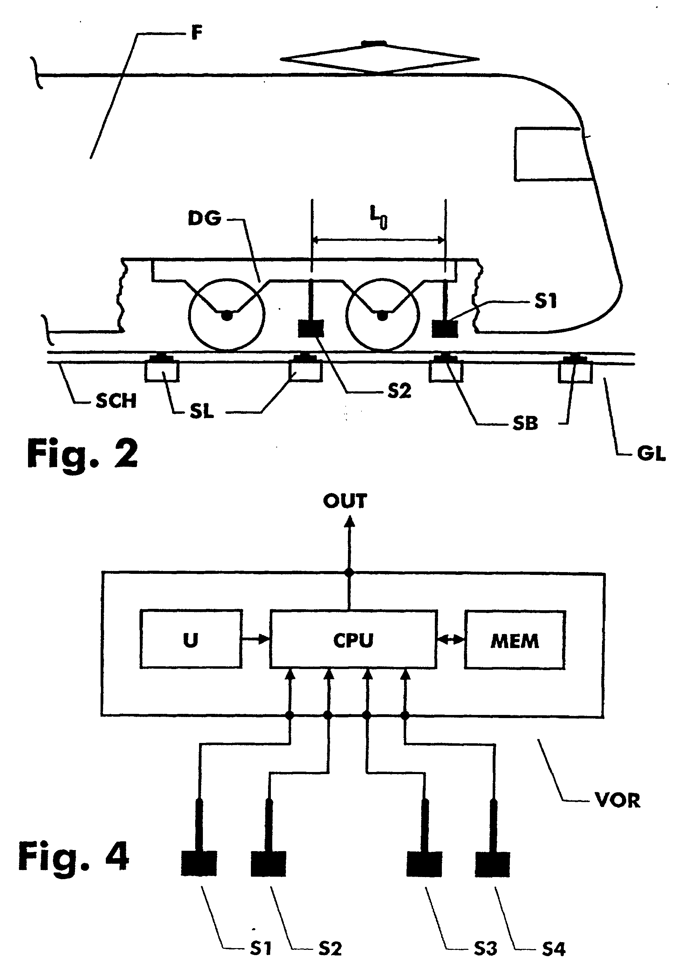

Fig. 2 zeigt in einer vereinfachten seitlichen Darstellung ein Schienenfahrzeug F auf einem Gleis GL. Das Gleis GL besteht aus Schienen SCH, Schwellen SL und Schienenbefestigungen SB, die die Schienen SCH mit den Schwellen SL verbinden. Das Fahrzeug F ist mit wenigstens zwei im Abstand $L_0$ angeordneten Sensoren S1 und S2 ausgestattet, welche so an der Fahrzeugunterseite am Drehgestell DG befestigt ist, daß sie während der Fahrt in geringem Abstand die Schwellen oder die Schienenbefestigungen überstreichen. Die Sensoren umfassen Mittel, mit denen ein Überfahren der Schwellen SL oder der Schienenbefestigungen SB registriert werden kann.

Die Sensoren S1 und S2 selbst können, je nachdem, ob Schwellen oder Schienenbefestigungen registriert werden sollen, in unterschiedlicher Weise ausgebildet sein. Mit Sensoren, die ein von einem Sender ausgestrahltes Ultraschallsignal empfangen und auswerten, kann beispielsweise die im Vergleich zum Schotterbett glatte Oberfläche von Schwellen registriert werden. Bei Schnee, dicken Schmutzschichten oder auch bei festen Oberbau-Formen, bei denen die Schienen nicht auf einem Schotterbett, sondern auf einem Betonkörper befestigt sind, versagt allerdings diese Art von Registrierung. Daher wird es im allgemeinen vorzuziehen sein, die Schienenbefestigungen und nicht die Schwellen als Markierungen für die Wegmessung zu verwenden. Schienenbefestigungen sind auch beim festen Oberbau vorhanden und haben gegenüber Schwellen den Vorteil, grundsätzlich aus Metall zu bestehen. Damit können Schienenbefestigungen auch bei einer darüberliegenden Schnee- oder Schmutzschicht mit Hilfe elektromagnetischer Felder zuverlässig registriert werden.

Ein Ausführungsbeispiel für einen Sensor zum Registrieren von Schienenbefestigungen zeigt Fig. 2. Der Sensor S ist im Prinzip genauso aufgebaut wie ein Achszähler, so daß an dieser Stelle auf eine eingehende Beschreibung verzichtet werden kann. Eine von einer Wechselspannungsquelle GEN versorgte Sendespule SS erzeugt ein elektromagnetisches Wechselfeld, welches in einer in der Näher angeordneten Empfangsspule ES einen Wechselstrom induziert. Durch Einbringen eines metallischen Körpers, etwa einer Schienenbefestigung, in das von der Sendespule SS erzeugte Feld wird die induktive Kopplung zwischen Sende- und Empfangsspule verstärkt, so daß die Spannungsamplitude in der Empfangsspule steigt. Dieser Anstieg wird in einer Auswerteeinheit ausgewertet und bei Überschreiten einer Schwelle als Zählimpuls gewertet. Im dargestellten Ausführungsbeispiel wird das Ausgangssignal der Empfängerspule ES zunächst in einem A/D-Wandler digitalisiert und anschließend in einer digitalen Recheneinheit AWE ausgewertet.

Fig. 3 zeigt in vereinfachter Darstellung ein Ausführungsbeispiel für eine Vorrichtung VOR zur Ausführung des erfindungsgemäßen Verfahrens. Die Vorrichtung VOR umfaßt in diesem Beispiel vier am Körper befestigte Sensoren S1...S4, die ihre Zählimpulse an eine zentrale Recheneinheit CPU weitergeben. Die zentrale Recheneinheit CPU erhält von einer Uhr U die Zeit und speichert jeden Zählimpuls zusammen mit der Zeit der Registrierung im Speicher MEM ab. Aus den gespeicherten Registrierzeiten und evtl. zusätzlichen Werten, etwa dem Abstand der Sensoren-Paare $L_0$, berechnet die zentrale Recheneinheit in der oben geschilderten Weise den zurückgelegten Weg und/oder die Geschwindigkeit und gibt die berechneten Werte an den Ausgang OUT ab. Wenn, wie oben erläutert, das Verfahren mit Hilfe einer nichtlinearen Näherung durchgeführt wird, so werden im Speicher MEM auch zeitlich weiter zurückliegende Werte für die Geschwindigkeit des Körpers gespeichert und der zentralen Recheneinheit CPU zur Verfügung gestellt. Die zentrale Recheneinheit CPU kann beispielsweise als andwendungsspezifischer integrierter Schaltkreis (ASIC) oder als frei programmierbarer Prozessor realisiert sein.

**Patentansprüche**

1. Verfahren zur Bestimmung der von einem Körper zurückgelegten Wegstrecke, bei dem wenigstens zwei am Körper befestigte Sensoren (S1, S2) unabhängig voneinander das Vorbeibewegen des Körpers an Markierungen (M1...M3) registrieren, die entlang der Wegstrecke angeordnet sind, wobei die Zeiten der Registriervorgänge in einem Speicher gespeichert werden, **dadurch gekennzeichnet, daß**

   - ein Rechner unter Verwendung der gespeicherten Zeiten und des Abstands $L_0$, den zwei der Sensoren in Bewegungsrichtung zueinander haben, den Abstand zwischen jeweils zwei Markierungen berechnet, und daß

   - der Rechner die zurückgelegte Wegstrecke durch Aufsummierung über die berechneten Abstände zwischen jeweils zwei Markierungen ermittelt.

2. Verfahren nach Anspruch 1, bei dem der Abstand $L_0$ annähernd so groß ist wie der mittlere Abstand zwischen den Markierungen.

3. Verfahren nach Anspruch 2, bei dem der Rechner bei der Berechnung der zurückgelegten Wegstrecke

   a) aus der Zeitspanne $\Delta_1$, die vergeht zwischen der Registrierung einer ersten Markierung durch einen Sensor und der Registrierung derselben Markierung durch einen anderen Sensor, und aus dem Abstand $L_0$ zwischen dem einen Sensor und dem anderen Sensor eine mittlere Geschwindigkeit gemäß $v_m = L_0 / \Delta_1$ berechnet,

   b) und bei dem der Rechner aus der mittleren Geschwindigkeit $v_m$ und aus der Zeitspanne $\Delta_2$, die vergeht zwischen der Registrierung der ersten Markierung durch einen der beiden Sensoren und der Registrierung einer der ersten Markierung in Fahrtrichtung unmittelbar folgenden zweiten Markierung durch denselben Sensor, einen Näherungswert $d_{sa}$ für den Abstand zwischen der ersten und der zweiten Markierung gemäß $d_{sa} = V_m \cdot \Delta_2$ berechnet.

4. Verfahren nach Anspruch 2, bei dem der Rechner bei der Berechnung der zurückgelegten Wegstrecke

   a) aus der Zeitspanne $\Delta_1$, die vergeht zwischen der Registrierung einer ersten Markierung durch einen Sensor und der Registrierung derselben Markierung durch einen anderen Sensor, und aus dem Abstand $L_0$ zwischen dem einen Sensor und dem anderen Sensor eine durch nichtlinearer Näherung ermittelte Geschwindigkeit berechnet,

b ) und bei dem der Rechner aus der nichtlinearer Näherung ermittelten Geschwindigkeit und aus der Zeitspanne $\Delta_2$, die vergeht zwischen der Registrierung der ersten Markierung durch einen der beiden Sensoren und der Registrierung einer der ersten Markierung in Fahrtrichtung unmittelbar folgenden zweiten Markierung durch denselben Sensor, einen Näherungswert $d_{sa}$ für den Abstand zwischen der ersten und der zweiten Markierung berechnet.

**5.** Verfahren nach Anspruch 2, bei dem der Rechner bei der Berechnung der zurückgelegten Wegstrecke

a) aus der Zeitspanne $\Delta_1$, die vergeht zwischen der Registrierung einer ersten Markierung durch einen Sensor und der Registrierung derselben Markierung durch einen anderen Sensor, und aus dem Abstand $L_0$ zwischen dem einen Sensor und dem anderen Sensor und der Rechner aus der zurückgelegten Wegstrecke durch zeitliches Differenzieren die Geschwindigkeit des Körpers berechnet

b) und bei dem der Rechner der durch Differenzieren ermittelten Geschwindigkeit und aus der Zeitspanne $\Delta_2$, die vergeht zwischen der Registrierung der ersten Markierung durch einen der beiden Sensoren und der Registrierung einer der ersten Markierung in Fahrtrichtung unmittelbar folgenden zweiten Markierung durch denselben Sensor, einen Näherungswert $d_{sa}$ für den Abstand zwischen der ersten und der zweiten Markierung berechnet

**6.** Verfahren nach einem der vorhergehenden Ansprüche, bei dem

a) der Körper ein Schienenfahrzeug (F) ist, das sich auf einem Schienenweg bewegt (GL),

b) die Markierungen Schwellen (SL) oder Schienenbefestigungen (SB) sind.

**7.** Vorrichtung (VOR in Fig. 4) zur Bestimmung der von einem Körper zurückgelegten Wegstrecke mit wenigstens zwei an dem Körper befestigten Sensoren (S1...S4), deren Abstand in Fahrtrichtung $L_0$ beträgt und die Mittel haben zum Registrieren von entlang der Wegstrecke angeordneten Markierungen, wobei

die Vorrichtung ferner umfaßt:

a) eine Uhr (U) zur Messung der Zeit von Registriervorgängen,

b) einen Speicher (MEM) zum Abspeichern dieser Zeiten, **dadurch gekennzeichnet, daß** die Vorrichtung weiterhin einen Rechner (CPU) umfaßt, der unter Verwendung der gespeicherten Zeiten und des Abstands $L_0$ den Abstand zwischen jeweils zwei Markierungen berechnet und die zurückgelegte Wegstrecke durch Aufsummierung über die berechneten Abstände zwischen jeweils zwei Markierungen ermittelt.

**8.** Vorrichtung nach Anspruch 7, bei der der Körper ein Schienenfahrzeug ist und die Sensoren Mittel umfassen zum Registrieren von Schwellen oder Schwellenbefestigungen.

**9.** Vorrichtung nach Anspruch 7, bei der der Rechner zur Berechnung des Abstands zwischen jeweils zwei Markierungen

a) aus der Zeitspanne $\Delta_1$ die vergeht zwischen der Registrierung einer ersten Markierung durch einen Sensor und der Registrierung derselben Markierung durch einen anderen Sensor, und aus dem Abstand $L_0$ zwischen dem einen Sensor und dem anderen Sensor eine mittlere Geschwindigkeit gemäß $v_m = L_0 / \Delta_1$ berechnet, und

b) aus dieser mittleren Geschwindigkeit $v_m$ und aus der Zeitspanne $\Delta_2$, die vergeht zwischen der Registrierung der ersten Markierung durch einen der beiden Sensoren und der Registrierung einer der ersten Markierung unmittelbar folgenden zweiten Markierung durch denselben Sensor, einen Näherungswert $d_{sa}$ für den Abstand zwischen der ersten und der zweiten Markierung gemäß $d_{sa} = v_m \cdot \Delta_2$ bestimmt.

**Claims**

**1.** A method of determining the distance traveled by a body wherein at least two sensors (S1, S2) mounted on the body register the motion of the body past marks (M1...M3) arranged along the route being traveled independently of each other, the times of registration being stored in a memory, **characterized in**

- **that** a computer calculates the distance between every two marks using the stored times and the distance $L_0$ by which two of the sensors are separated in the direction of motion, and

- **that** the computer determines the distance traveled by summing over the calculated distances between every two marks.

2. A method as claimed in claim 1 wherein the distances $L_0$ is approximately equal to the mean distance between the marks.

3. A method as claimed in claim 2 wherein the computer, in calculating the distance traveled, calculates

    a) from the time interval $\Delta_1$ between the registration of a first mark by one sensor and the registration of the same mark by another sensor and from the distance $L_0$ between the one sensor and the other sensor an average speed according to $v_m = L_0/\Delta_1$, and

    b) from the average speed $v_m$ and the time interval $\Delta_2$ between the registration of the first mark by one of the two sensors and the registration by the same sensor of a second mark, which immediately follows the first mark in the direction of travel, an approximate value $d_{sa}$ for the distance between the first mark and the second mark according to $d_{sa} = v_m \cdot \Delta_2$.

4. A method as claimed in claim 2 wherein the computer, in calculating the distance traveled, calculates

    a) a speed from the time interval $\Delta_1$ between the registration of a first mark by one sensor and the registration of the same mark by another sensor and from the distance $L_0$ between the one sensor and the other sensor using a nonlinear approximation, and

    b) from the calculated speed and the time interval $\Delta_2$ between the registration of the first mark by one of the two sensors and the registration by the same sensor of a second mark, which immediately follows the first mark in the direction of travel, an approximate value $d_{sa}$ for the distance between the first mark and the second mark.

5. A method as claimed in claim 2 wherein the computer, in calculating the distance traveled, calculates

    a) from the time interval $\Delta_1$ between the registration of a first mark by one sensor and the registration of the same mark by another sensor and from the distance $L_0$ between the one sensor and the other sensor the speed of the body by differentiation with respect to time, and

    b) and from the speed determined by differentiation and from the time interval $\Delta_2$ between the registration of the first mark by one of the two sensors and the registration by the same sensor of a second mark, which immediately follows the first mark in the direction of travel, an approximate value $d_{sa}$ for the distance between the first mark and the second mark.

6. A method as claimed in any one of the preceding claims wherein

    a) the body is a rail vehicle (F) moving on a railway line (GL), and

    b) the marks are sleepers (SL) or rail fastenings (SB).

7. An apparatus (VOR in Fig. 4) for determining the distance traveled by a body, the apparatus comprising at least two sensors (S1...S4) mounted on the body which are separated by a distance $L_0$ in the direction of travel and comprise means for registering marks arranged along the route being traveled by the body, and further comprising:

    a) a clock (U) for measuring the times of registration, and

    b) a memory (MEM) for storing these times,

**characterized in that** the apparatus further comprises a computer (CPU) which calculates the distance between every two marks using the stored times and the distance $L_0$, and which determines the distance traveled by summing over the calculated distances between every two marks.

8. An apparatus as claimed in claim 7 wherein the body is a rail vehicle, and wherein the sensors comprise means for registering sleepers or rail fastenings.

9. An apparatus as claimed in claim 7 wherein the computer, in order to calculate the distance between every two marks, calculates

    a) from the time interval $\Delta_1$ between the registration of a first mark by one sensor and the registration of the same mark by another sensor and from the distance $L_0$ between the one sensor and the other sensor an average speed according to $v_m = L_0/\Delta_1$, and

    b) from this average speed $v_m$ and the time interval $\Delta_2$ between the registration of the first mark by one of the two sensors and the registration by the same sensor of a second mark, which immediately follows the first mark, an approximate value $d_{sa}$ for the distance between the first mark and the second mark according to $d_{sa} = v_m \cdot \Delta_2$.

## Revendications

1. Procédé pour la détermination de la distance parcourue par un corps, dans lequel au moins deux capteurs (S1,S2) fixés sur le corps enregistrent indépendamment l'un de l'autre le déplacement et le passage du corps devant des repères (M1...M3), qui sont disposés le long du parcours, moyennant quoi les heures des opérations d'enregistrement sont mémorisées dans une mémoire, **caractérisé en ce qu'**un ordinateur calcule l'espace entre respectivement deux repères, en utilisant les heures mémorisées et la distance $L_0$, qui sépare deux des capteurs dans le sens du déplacement, et **en ce que** l'ordinateur calcule la distance parcourue en faisant le total des distances calculées entre respectivement deux repères.

2. Procédé selon la revendication 1, dans lequel la distance $L_0$ est approximativement aussi grande que l'espacement moyen entre les repères.

3. Procédé selon la revendication 2, dans lequel l'ordinateur calcule lors du calcul de la distance parcourue

   a) une vitesse moyenne selon $v_m = L_0 / \Delta_1$ à partir du laps de temps $\Delta_1$, qui s'écoule entre l'enregistrement d'un premier repère par un capteur et l'enregistrement du même repère par un autre capteur, et à partir de l'espacement $L_0$ entre un capteur et l'autre capteur, et
   b) dans lequel l'ordinateur calcule une valeur d'approximation $d_{sa}$ pour l'espace entre le premier et le second repères selon $d_{sa} = v_m \cdot \Delta_2$ à partir de la vitesse moyenne $v_m$ et à partir du laps de temps $\Delta_2$, qui s'écoule entre l'enregistrement du premier repère par l'un des deux capteurs et l'enregistrement d'un second repère suivant directement le premier repère dans le sens de déplacement par le même capteur.

4. Procédé selon la revendication 2, dans lequel l'ordinateur calcule lors du calcul de la distance parcourue

   a) une vitesse calculée par approximation non linéaire à partir du laps de temps $\Delta_1$ qui s'écoule entre l'enregistrement d'un premier repère par un capteur et l'enregistrement du même repère par un autre capteur, et à partir de l'espace $L_0$ entre un capteur et l'autre capteur, et

   b) dans lequel l'ordinateur calcule une valeur d'approximation $d_{sa}$ pour la distance entre le premier et le second repères à partir de l'approximation non linéaire de la vitesse calculée et à partir du laps de temps $\Delta_2$ qui s'écoule entre l'enregistrement du premier repère par l'un des deux capteurs et l'enregistrement d'un second repère suivant directement le premier repère dans le sens de marche par le même capteur.

5. Procédé selon la revendication 2, dans lequel l'ordinateur calcule lors du calcul de la distance parcourue

   a) la vitesse du corps à partir du laps de temps $\Delta_1$ qui s'écoule entre l'enregistrement d'un premier repère par un capteur et l'enregistrement du même repère par un autre capteur, et à partir de la distance $L_0$ entre un capteur et l'autre capteur et à partir de la distance parcourue par différenciation dans le temps, et
   b) dans lequel l'ordinateur calcule une valeur d'approximation $d_{sa}$ pour l'espacement entre le premier et le second repère à partir de la vitesse déterminée par différenciation et à partir du laps de temps $\Delta_2$ qui s'écoule entre l'enregistrement du premier repère par l'un deux capteurs et l'enregistrement d'un second repère suivant directement le premier repère dans le sens de marche par le même capteur.

6. Procédé selon l'une quelconque des revendications précédentes, dans lequel

   a) le corps est un véhicule sur rails (F), qui se déplace sur une voie sur rails (GL),
   b) les repères sont des traverses (SL) ou des fixations de rails (SB).

7. Dispositif (VOR sur la figure 4) pour la détermination de la distance parcourue par un corps avec au moins deux capteurs fixés sur le corps (S1...S4), dont l'espacement dans le sens de marche est $L_0$ et qui ont des moyens pour l'enregistrement de repères disposés le long du parcours, le dispositif comprenant également :

   a) une pendule (U) pour la mesure de l'heure des opérations d'enregistrement
   b) une mémoire (MEM) pour la mémorisation de ces heures, **caractérisé en ce que** le dispositif comprend également un ordinateur (CPU), qui calcule l'espacement entre respectivement deux repères en utilisant les heures enregistrées et la distance $L_0$ et détermine la distance parcourue en faisant le total des distances calculées entre respectivement deux re-

13          EP 0 891 911 B1          14

pères.

8. Dispositif selon la revendication 7, dans lequel le corps est un véhicule sur rails et les capteurs comprennent des moyens pour l'enregistrement de traverses ou de fixations de traverses.

9. Dispositif selon la revendication 7, sur lequel l'ordinateur

a) calcule une vitesse selon $v_m = L_0 / \Delta_1$ à partir du laps de temps $\Delta_1$ qui s'écoule entre l'enregistrement d'un repère par un capteur et l'enregistrement du même repère par un autre capteur, et à partir de la distance $L_0$ entre le premier capteur et l'autre capteur, et
b) calcule une valeur d'approximation $d_{sa}$ pour l'espace entre le premier et le second repères selon $d_{sa} = v_m \cdot \Delta_2$ à partir de cette vitesse moyenne $v_m$ et à partir du laps de temps $\Delta_{2b}$ qui s'écoule entre l'enregistrement du premier repère par l'un des deux capteurs et l'enregistrement d'un second repère suivant directement le premier repère par le même capteur.

8

# Fig. 1

# Fig. 3

**Fig. 2**

**Fig. 4**